(19) Europäisches Patentamt
European Patent Office
Office européen des brevets

(11) **EP 1 597 025 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(51) Int Cl.:
**B23J 17/02** *(2006.01)* **B23Q 1/54** *(2006.01)*

(21) Anmeldenummer: **04715243.4**

(22) Anmeldetag: **27.02.2004**

(86) Internationale Anmeldenummer:
**PCT/DE2004/000377**

(87) Internationale Veröffentlichungsnummer:
**WO 2004/076132 (10.09.2004 Gazette 2004/37)**

(54) **PARALLELROBOTER FÜR WERKZEUGE**

PARALLEL ROBOTS FOR TOOLS

ROBOT POUR OUTILS ET PROCEDE D'ETALONNAGE D'UN DISPOSITIF

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **28.02.2003 DE 20303367 U**

(43) Veröffentlichungstag der Anmeldung:
**23.11.2005 Patentblatt 2005/47**

(73) Patentinhaber: **Faude, Dieter**
**71116 Gärtringen (DE)**

(72) Erfinder: **FAUDE, Dieter**
**71116 Gärtringen (DE)**

(74) Vertreter: **Schuster, Gregor et al**
**Patentanwälte**
**Schuster & Thul**
**Wiederholdstrasse 10**
**70174 Stuttgart (DE)**

(56) Entgegenhaltungen:
**EP-A- 1 125 693     WO-A-99/28097**
**DE-A- 19 614 641     DE-A- 19 921 325**

- **PATENT ABSTRACTS OF JAPAN Bd. 1999, Nr. 09, 30. Juli 1999 (1999-07-30) -& JP 11 114777 A (TOYODA MACH WORKS LTD), 27. April 1999 (1999-04-27)**
- **"Parallelstabkinematik mit Kompakt-PC-Steuerung" INDUSTRIEBEDARF, [Online] November 2003 (2003-11), - Dezember 2003 (2003-12) Seite 10, Gefunden im Internet: URL: http://fzarchiv.sachon.de/index.php?pd f=Fachzeitschriften/Industriebedarf/2003/1 1_03/IB_11-03_10-11_Parallelstabkinematik. pdf> [gefunden am 2008-08-26]**

**Beschreibung**

Stand der Technik

Die Erfindung geht aus von einer Vorrichtung zur dreidimensionalen Bewegung (Roboter) eines Gegenstandes (Werkzeugs) nach der Gattung des Hauptanspruchs.

Derartige Vorrichtungen, oft auch als Roboter bezeichnet, dienen bevorzugt dazu, ein Werkzeug, oder einen sonstigen Gegenstand, entsprechend einem vorgegebenen Programm dreidimensional zu bewegen. Derartige Automaten finden ihren Einsatz nicht nur in unzugänglichen oder gefährlichen Räumen, sondern vor allem auch als Ersatz für menschliche manuelle Tätigkeit.

Bei einem bekannten Industrieroboter der gattungsgemäßen Art (AT PS E65200B) dient als Basisteil eine Grundplatte, an deren drei Stirnseiten Steuerarme durch Motoren schwenkbar angelenkt sind, die wiederum über Gelenke mit Trägerarmen verbunden sind, welche andernends am Gegenstandshalter angelenkt sind. Der Nachteil dieser bekannten Vorrichtung besteht in dem Einsatz der Steuerarme, deren den Trägerarmen zugewandtes Ende beim Schwenken des Steuerarms einen Kreis vollzieht, der für die Positionierung des Gegenstandshalters im Programm berücksichtigt werden muss, wodurch dieses zusätzlich kompliziert wird. Da die Kraftübertragung zudem durch die dem Hebelgesetz folgende Schwenkbewegung verursachenden Verdrehmotoren erfolgt, ist der Einsatz solcher Roboter wegen der begrenzten Belastbarkeit entsprechend eingeschränkt. Nicht zuletzt ist die dort gegebene Kinematik verhältnismäßig aufwendig.

Bei einer anderen bekannten Vorrichtung für Positionierung eines Werkzeugs odgl. (DE OS 199 20 776 A1) wird eine als Gegenstandshalter dienende Arbeitsplattform positioniert, in dem drei verschwenkbar an dieser Arbeitsplattform angelenkten Trägerarme andernends auf einer gemeinsamen flächigen Plattform verschiebbar sind. Diesem Verschieben in einer Ebene sind naturgemäß enge Grenzen gesetzt mit entsprechend eng begrenzter Verstellmöglichkeit der Arbeitsplattform, ganz abgesehen davon, dass bei relativ weitem Auseinanderverfahren der gegebenen Enden auf der Ebene große Hebelkräfte und damit kinematische Probleme entstehen.

Das Dokument DE-A-19614641 offenbart eine Vorrichtung zur dreidimensionalen Bewegung eines Gegenstandes nach dem Oberbegriff des Anspruchs 1. Die Erfindung

Die erfindungsgemäße Vorrichtung wird in Anspruch 1 definert.

Dabei sind die Stützen und der Verbindungsrahmen nicht unmittelbar mit der ortsfesten Grundplatte sondern mit an dieser Grundplatte angeordneten Haltevorrichtungen verbunden. Das dadurch entstandene Basisteil ist nicht ortsfest. Dadurch ist eine Höhenverstellung möglich.

Nach einer vorteilhaften Ausgestaltung der Erfindung sind die Trägerarme als Doppelstangen ausgebildet, an denen auf der den Trägerstangen zugewandten Enden Gelenke und zur Ankoppelung an die Trägerstangen an den Gelenken aufweisende Schuhe vorhanden sind. Die Trägerstangen hingegen bestehen bevorzugt aus Profilrohren bestimmter Querschnittsgestaltung und können an ihren Enden zur Verbesserung der Stabilität des Basisteils über einen Rahmen miteinander verbunden sein.

Nach einer zusätzlichen vorteilhaften Ausgestaltung der Erfindung sind die Gelenke als Kardangelenke ausgebildet mit Schwenkmöglichkeit in zwei Richtungen, so dass eine von den Stützen her gegebene Führung kinematisch günstig auf den Gegenstandshalter übertragen wird.

Nach einer zusätzlichen Ausgestaltung der Erfindung sind die Stützen als Profilstäbe ausgebildet, wobei zur Führung der zugewandten Enden der Trägerarme, bzw. der Gelenke dem Profil der Profilstäbe angepasste Gleitschuhe dienen. An diesen Gleitschuhen wiederum greifen die Betätigungseinrichtungen für die Vertikalverstellung an, so dass je nach Lage der einzelnen Gleitschuhe der Gegenstandshalter eine entsprechende andere Lage einnimmt.

Nach einer zusätzlichen vorteilhaften Ausgestaltung der Erfindung sind die Gelenke auf den Gelenken zugewandten Schrägflächen des Gegenstandshalters befestigt. Hierdurch sind die Gelenke, beispielsweise Kardangelenke, weitgehend in Längsrichtung der Trägerarme angeordnet, was sich vor allem positiv auf einen großen Schwenkbereich und eine präzise Verstellung des Gegenstandshalters auswirkt.

Nach einer zusätzlichen vorteilhaften Ausgestaltung der Erfindung weist der Gegenstandshalter für ein Halten des Gegenstandes eine Halteeinrichtung, beispielsweise ein Spannfutter, auf, welches über eine flexible Welle und/oder einer Versorgungsleitung betätigbar sein kann, beispielsweise durch Verstellen des Futters aber auch für das Verdrehen eines Werkzeugs.

Die Verstellung der in den Stützen geführten Schuhe kann über Spindeln erfolgen, die durch Motoren angetrieben werden, welche an den oberen und/oder unteren Enden der Stützen angeordnet sind. Je nach Verstellungswunsch erfolgt eine unterschiedliche Drehrichtung. Natürlich kann diese Längsverstellung des Schuhs in der Stütze auch durch andere Hubmittel erfolgen, wie beispielsweise pneumatisch oder hydraulisch angetriebene Arbeitszylinder.

Nach einer weiteren vorteilhaften Ausgestaltung der Erfindung ist zumindest eine der Stützen abnehmbar ausgeführt. Die Vorrichtung kann bei abgenommener Stütze leicht in ein Bestehendes System wie beispielsweise ein Förderband integriert werden.

In einer weiteren zweckmäßigen Ausgestaltung der Erfindung ist eine Steuerungseinrichtung in die Vorrichtung integriert und insbesondere unterhalb der Grundplatte angeordnet. Es ergibt sich eine voll integrierte, kompakte Baueinheit mit geringem Platzbedarf. Die eigentliche Kinematik oberhalb der Grundplatte ist an den drei Trägerarmen frei und ungehindert in allen räumlichen Richtungen beweglich.

In einer weiteren vorteilhaften Weiterbildung der Vorrichtung ist an dem Gegenstandshalter eine drehend antreibbare Drehaufnahme vorgesehen. Es ist dadurch eine sogenannte Stewart Plattform mit vier antreibbaren und steuerbaren Achsen gebildet, deren Einsatzbereich erweitert ist und eine universelle Anwendbarkeit der Vorrichtung ermöglicht. Die Drehaufnahme ist insbesondere auswechselbar gestaltet, wodurch ein modulhaftes System gegeben ist. Einzelne Komponenten wie Werkzeug, Greifer oder auch ein Meßsensor zum Kalibrieren der Anordnung können mit geringem Aufwand ausgetauscht bzw eingesetzt werden.

Nach einer zusätzlichen vorteilhaften Ausstaltung der Erfindung ist an dem Gegenstandshalter ein Meßsensor befestigt.

Nach einer diesbezüglichen vorteilhaften Ausgestaltung der Erfindung ist der Meßsensor mit einer Kalibriereinheit verbunden ist.

Die Kalibriereinheit erlaubt eine einfache und genaue Kalibrierung des Systems, mit dem die Stellgenauigkeit des Gegenstandshalters und des darin eingespannten Werkzeuges gesteigert wird. Es wird zunächst am Gegenstandshalter ein Meßsensor befestigt. Anschließend wird der Gegenstandshalter mit dem Meßsensor gegen eine definierte Anzahl von Meßpunkten verfahren und dabei mittels des Meßsensors für jeden Meßpunkt ein gemessener Weg als Istwert ermittelt. Aus einem Vergleich der gemessenen Istwerte mit bekannten Sollwerten werden Kalibrierfaktoren ermittelt, über die die Ansteuerung des Werkzeuges korrigiert wird. Aus nur wenigen Meßpunkten kann bei geringem Speicherbedarf und geringer Rechenleistung schnell eine genaue Korrektur des Verstellweges vom Gegenstandshalter vorgenommen werden, die durch Interpolation im vollständigen Verstellbereich die gewünschte Genauigkeit behält.

In einer vorteilhaften Ausgestaltung der Erfindung sind die Meßpunkte in einer Ebene und insbesondere auf einer kalibrierten ebenen Meßplatte angeordnet, wobei als Meßsensor ein eindimensionaler Wegaufnehmer vorgesehen ist. Der Meßsensor wird dabei im Wesentlichen rechtwinklig zur Meßplatte verfahren. Der eindimensionale Wegaufnehmer liefert während der linearen Meßwegaufnahme nur einen Satz von Meßwerten, wodurch nur ein geringer Speicherbedarf erforderlich ist. Da zur linearen Verstellung des Wegaufnehmers die entsprechenden Trägerarme dreidimensional verfahren werden müssen, kann aus der linearen Meßwegaufnahme mehrerer Meßpunkte ein dreidimensionales Kalibrierbild gewonnen werden, was bei einer geringen Anzahl von gespeicherte Soll- und Istwerten eine exakte räumliche Positionierung ermöglicht.

In einer weiteren vorteilhaften Ausgestaltung der Erfindung wird die Meßplatte horizontal bezogen auf das durch die Vorrichtung vorgegebene Koordinatensystem angeordnet, wobei der Meßsensor zur Kalibrierung vertikal verfahren wird. Im Hinblick auf den im Wesentlichen vertikalen Stellweg der Gleitschuhe mit den gelenkig daran befestigten Trägerarmen ergibt sich eine schnelle und genaue Kalibrierung.

Es werden vorteilhaft zur Kalibrierung eine Vielzahl von Meßpunkten angefahren. Die Vielzahl der flächig und insbesondere matrixhaft verteilten Meßpunkte erlaubt eine gleichmäßige Kalibrierqualität im gesamten Bewegungsraum des Gegenstandshalters.

In einer weiteren zweckmäßigen Ausgestaltung der Erfindung wird jeder Meßpunkt so oft angefahren, bis ein vorgegebene Anzahl von Meßwerten und insbesondere mindestens etwa zehn Meßwerte innerhalb einer vorgegebenen Toleranz liegen. Bei jedem Meßvorgang wird eine erneute Kalibrierung vorgenommen, wobei die Kalibriergenauigkeit iterativ von Meßvorgang zu Meßvorgang gesteigert wird. Erst wenn eine vorgegebene Anzahl von Meßvorgängen Meßwerte innerhalb eines vorgegebenen Toleranzbereiches liefert, wird die Kalibrierung als hinreichend genau angesehen, da durch mehrere Messungen innerhalb des Toleranzfensters Meßschwankungen unberücksichtigt bleiben. Die genannte Anzahl von etwa zehn Messungen innerhalb des Toleranzfensters hat sich als vorteilhafter Kompromiß zwischen Genauigkeit, Speicher- und Rechenbedarf sowie Schnelligkeit des Kalibrierungsprozesses herausgestellt.

Weitere Vorteile und vorteilhafte Ausgestaltungen der Erfindung sind der nachfolgenden Beschreibung, der Zeichnung und den Ansprüchen entnehmbar.

Zeichnung

Es zeigen:

Fig.1 eine perspektivische Ansicht eines Roboters, welcher nicht Teil der Erfindung ist.

Fig.2 ein vergrößerter Ausschnitt im Bereich des Gegenstandshalters;

Fig.3 einen vergrößerten Ausschnitt im Bereich der Führung der Trägerarme in der Stütze;

Fig. 4 eine perspektivische Ansicht einer Weiterentwicklung der Vorrichtung nach Fig. 1 mit einem unterhalb der Grundplatte angeordneten Schrank zur Aufnahme einer Steuerungseinrichtung;

Fig. 5 eine vergrößerte Detailansicht einer Variante des Gegenstandshalters der Anordnung nach den Fig. 1 bis 3;

Fig. 6 eine Ansicht des Gegenstandshalters nach Fig. 5 mit eingespanntem Meßsensor;

Fig. 7 eine schematische Draufsicht der Anordnung nach Fig. 4 mit zur Kalibrierung eingespannter Messplatte;

Fig. 8 eine schematische Seitenansicht der Anordnung nach Fig. 7 mit weiteren Einzelheiten zur Ausrichtung der Meßplatte und des Meßsensors.

Fig. 9 eine perspektivische Ansicht des Gegenstandshalters nach Fig. 5;

Fig. 10 eine weitere perspektivische Ansicht des Gegenstandshalters nach Fig. 5;

Fig. 11 eine perspektivische Ansicht des Kardangelenkes und

Fig. 12 eine perspektivische Ansicht des Gegenstandshalters nach Fig. 5 mit eingespanntem Messsensor.

Beschreibung des Ausführungsbeispiels

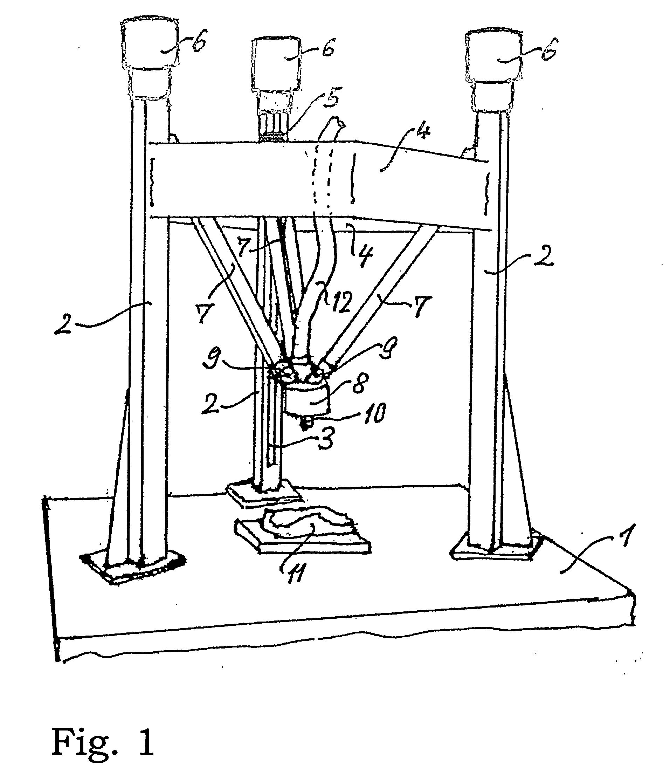

Bei dem in Fig. 1 perspektivisch dargestellten Roboter sind auf einer Grundplatte 1 drei Stützen 2 befestigt, die als einseitig offene Profilschienen ausgebildet sind mit einem entsprechenden Öffnungsschlitz 3 und die in ihrem oberen Teil über Verbindungsrahmen 4 miteinander verbunden sind. In den Öffnungsschlitzen 3 sind Gleitschuhe 5 angeordnet und hintergreifend für eine vertikale Bewegung geführt. An den oberen Enden der Stützen 2 sind Elektromotoren 6 angeordnet mit wechselbarer Drehrichtung, die über nicht dargestellte Gewindespindeln die Gleitschuhe 5 antreiben. Mit den Gleitschuhen 5 sind als Trägerarme 7 dienende Doppelstangen verbunden, die andernends mit einem Gegenstandshalter 8, beispielsweise einem Werkzeugkopf, gelenkig verbunden sind. Zur Verbindung dienen Gelenke 9. An diesem Kopf ist außerdem ein Werkzeug 10 angeordnet, mit dem ein auf der Grundplatte 1 angeordnetes Werkstück 11 bearbeitbar ist. Das Werkzeug 10 wird mit Hilfe einer flexiblen Welle und/oder einer Versorgungsleitung 12 angetrieben.

Je nach dem welcher der drei Schuhe 5 durch den jeweiligen Elektromotor 6 und auch in welche vertikale Richtung verschoben wird, ist der Gegenstandshalter 8 entsprechend über den zugeordneten Trägerarm 7 im Raum verstellbar, und zwar nach allen dreidimensionalen Richtungen. Die Motoren 6 sind mit einem nicht dargestellten elektrischen Steuergerät verbunden, in welchem ein Rechner ein jeweils eingegebenes Programm für die Roboterfunktion umsetzt. Mit diesem Steuergerät wird auch der ebenfalls nicht dargestellte Antriebsmotor der flexiblen Welle und/oder der Versorgungsleitung 12 gesteuert. Maßgebend ist, dass die aufeinander abgestimmte vertikale Führung der Schuhe 5 eine entsprechende Bewegung des Gegenstandshalters 8 programmgemäß bewirkt.

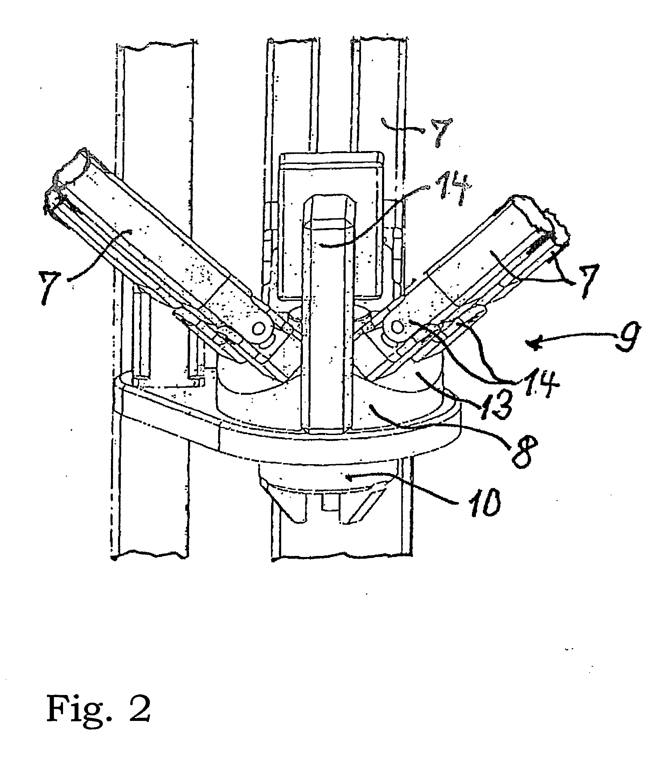

In Fig. 2 ist vor allem die Anbindung der Trägerarme 7 an den Gegenstandshalter 8 gezeigt, wobei diese Gelenke 9 als Kardangelenke 14 ausgebildet sind, die zwei senkrecht aufeinanderstehende Schwenkbewegungen zulassen. Da die Trägerarme 7 als Rohre ausgebildet sind, sind die Endabschnitte der jeweils diesen Rohren zugewandten Enden der Kardangelenke 14 verjüngt ausgebildet und in die Rohre gesteckt. Auf diese Weise sind zwei derartige Kardangelenke nebeneinander angeordnet, jeweils die gleichen Schwenkbewegungen zulassend. Auf der den Trägerarmen 7 abgewandten Seite sind die Kardangelenke 14 auf Schrägflächen 13 des Gegenstandshalters 8 befestigt. Diese Schrägfläche steht in etwa senkrecht zu der von den Trägerarmen 7 überwiegend eingenommenen Arbeitsstellung.

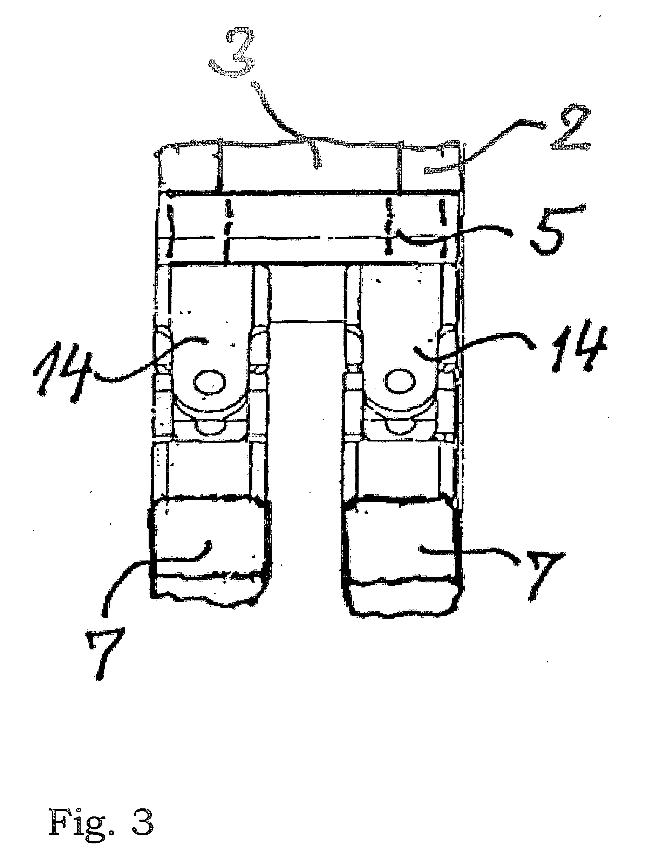

Bei der in Fig. 3 dargestellten Anbindung der Trägerarme 7 auf ihren dem Gegenstandshalter 8 abgewandten Enden sind diese als Trägerarme dienenden Rohre auf entsprechende Kardangelenke 14 gesteckt, deren abgewandtes Ende mit dem Gleitschuh 5 verbunden ist, der wiederum, wie hier nicht näher dargestellt, hintergreifend durch den Öffnungsschlitz 3 an die Stütze 2 gekoppelt ist.

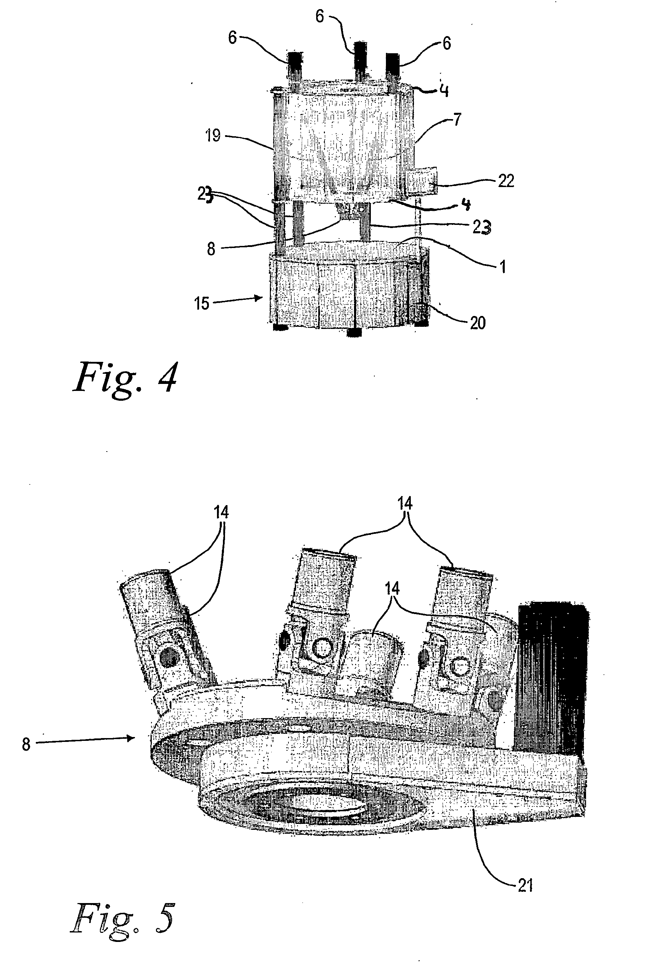

Fig. 4 zeigt in einer perspektivischen Übersichtsdarstellung ein Ausführungsbeispiel einer Weiterentwicklung des Roboters nach den Figuren 1 bis 3, bei dem drei Haltevorrichtungen 23 an drei benachbarten Ecken einer sechseckigen Grundplatte 1 angeordnet sind. Die Stützen (2) und die Verbindungsrahmen 4 sind mit den Haltevorrichtungen 23 (und nicht unmittelbar mit der Grundplatte 1) verbunden, wodurch die dadurch gebildete Einheit (Basisteil) nicht ortsfest sondern frei beweglich ist und in der Höhe verstellt werden kann. Aus dem Fehlen von Haltevorrichtungen 23 an den weiteren Ecken der Grundplatte 1 ergibt sich eine ungehinderte seitliche Zugänglichkeit des Arbeitsbereiches vom Gegenstandshalter 8. Beispielsweise kann ein Förderband ungehindert über die Grundplatte 1 geführt werden. Bei einer Anordnung der Stützen 2 nach Fig. 1 ist eine der Stützen 2 abnehmbar ausgestaltet, wodurch die Vorrichtung mit ihrer Grundplatte 1 beispielsweise unter ein vorhandenes und montiertes Förderband geschoben und durch anschließende Montage der abgenommenen Stütze 2 vervollständigt werden kann.

Der Bereich der an den Haltevorrichtungen 23 vertikal verschieblich geführten Trägerarme mit dem gelenkig daran befestigten Gegenstandshalter ist durch eine umlaufende, transparente Abdeckung 19 geschützt. Unterhalb der Grundplatte 1 ist ein Schrank zur Aufnahme einer nicht näher dargestellten Steuerungseinrichtung 15 vorgesehen, wodurch die gezeigte Anordnung zu einem integrierten, kompakten und autarken System wird. Die Steuerungseinrichtung 15 ist mittels einer Bedienoberfläche 22 betätigbar. Mittels der elektronischen Steuerungseinrichtung 15 werden die Elektromotoren 6 zur Bewegung des Gegenstandshalters 8 angesteuert. In der Steuerungseinrichtung 15 sind auch eine Kalibrierroutine sowie Soll- und Istwerte für eine Kalibrierung gespeichert.

Fig. 5 zeigt in einer vergrößerten Detailansicht eine Variante des Gegenstandshalters 8 nach Fig. 5, an dem drei Paare von hochpräzisen Kardangelenken 14 zur Befestigung an den als Doppelarmen ausgeführten Trägerarmen (Fig. 4) vorgesehen sind. Durch eine mittels der Steuerungseinrichtung 15 koordiniert durchgeführten vertikalen und dabei verschwenkbare Verstellung der Trägerarme 7 ist eine lineare Bewegung des Gegenstandshalters 8 in allen drei räumlichen Koordinatenrichtungen sowie eine zumindest begrenzte Verschwenkung um alle drei Koordinatenachsen möglich. Eine vierte Schwenkachse ist durch eine Drehaufnahme 21 gegeben, die drehbar und austauschbar an dem Gegenstandshalter 8 gelagert ist. Die Drehachse der Drehaufnahme 21 liegt dabei senkrecht zur Grundfläche des Gegenstandshalters 8, wobei die Drehachse als vierte antreibbare und steuerbare Achse mit dem Gegenstandshalter 8 mit verschwenkt wird.

Es ist dadurch eine sogenannte Stewart Plattform mit vier steuerbaren Achsen gebildet, deren Einsatzbereich erweitert ist. Einzelne Module können schnell ausgetauscht werden. Es sind mit geringen Anpassungsarbeiten verschiedene Anwendungen wie 2,5D-Fräsbearbeitung, Bohren, bandsynchrones Pick & Place, sowie Sonderanwendungen, bei denen hohe Kräfte in Z-Richtung (vertikal) benötigt werden (Nieten, Schneiden, Pressen, etc.) möglich. Durch die vierte NC-Achse der Drehaufnahme 21 können in Verbindung mit einem integrierten Kamerasystem beispielsweise Teile bandsynchron von einem laufenden Förderband, daß durch die Anlage läuft, abgegriffen oder darauf plaziert werden.

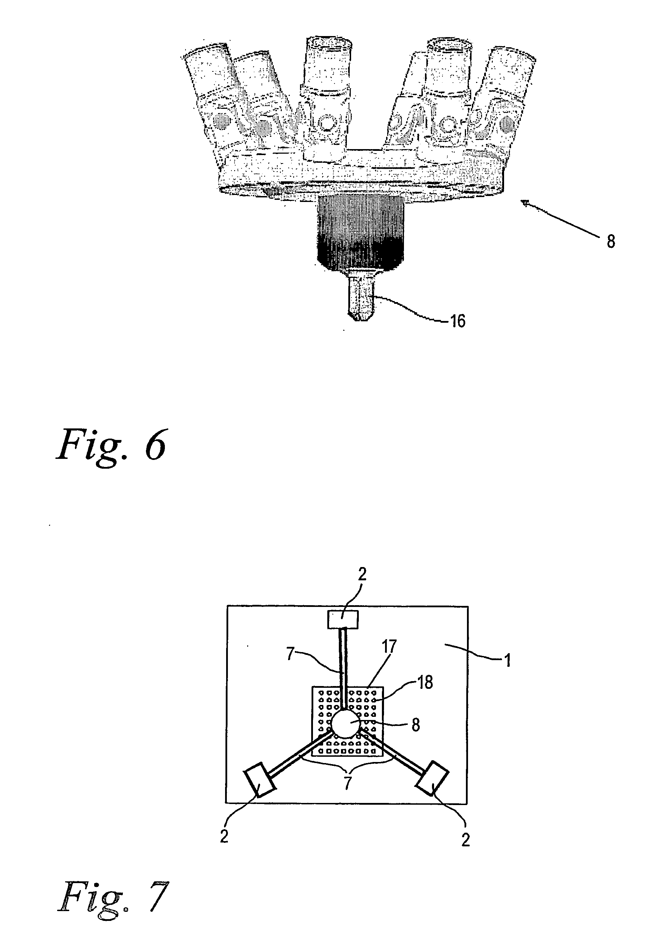

Nach Fig. 6 ist anstelle der Drehaufnahme 21 ein Meßsensor 16 am Gegenstandshalter 8 eingespannt. Die hier gezeigte Konfiguration ist zur Ausführung eines im Folgenden näher beschriebenen Kalibrierung vorgesehen.

Fig. 7 zeigt in einer schematischen Draufsicht die Anordnung nach Fig. 4 mit drei sternförmig angeordneten Stützen 2 und mit dem etwa mittig zwischen den Stützen 2 liegenden Gegenstandshalter 8, der mittels der gelenkigen Trägerarme 7 verstellbar an den Stützen 2 gehalten und beweglich geführt ist. Für einen Kalibriervorgang ist unterhalb des Gegenstandshalters 8 eine ebene und kalibrierte Meßlatte 17 mit matrixförmig angeordneten, kalibrierten Meßpunkten 18 auf der Grundplatte 1 aufgespannt. Die geometrische Ausbildung der Meßplatte 17 und die kalibrierte Lage der Meßpunkte 18 sind als Sollwertkoordinaten in der Steuerungseinrichtung 15 (Fig. 4) gespeichert.

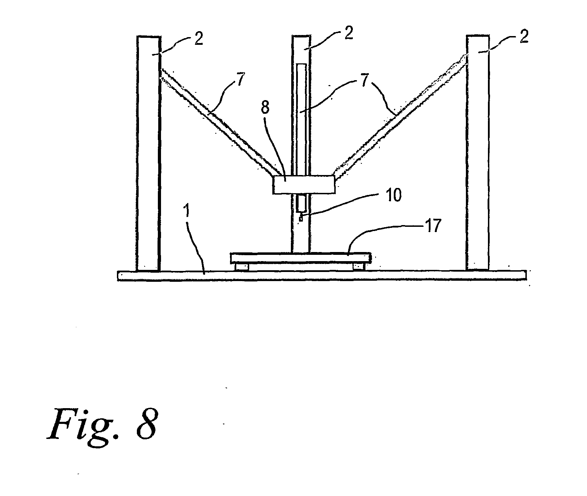

Fig. 8 zeigt die Anordnung nach Fig. 7 in einer Seitenansicht, demnach die Meßplatte 17 horizontal bezogen auf das durch die Vorrichtung vorgegebene Koordinatensystem und damit parallel zur Grundplatte 1 angeordnet ist. Als Werkzeug 10 kann ein Messsensor 16 dienen, wobei dieser Meßsensor 16 als eindimensionaler, linearer Wegaufnehmer ausgebildet ist. Er ist bezogen auf die Vorrichtung vertikal im Gegenstandshalter 8 eingespannt und wird zur Kalibrierung senkrecht gegen die einzelnen Meßpunkte 18 bzw. gegen die Meßplatte 18 verfahren. Insgesamt wird der Meßsensor 16 gegen einen einzelnen Meßpunkte 18 bis zu zehn mal verfahren und dabei der Verfahrweg über den Meßsensor aufgenommen und gespeichert. Die ermittelten Istwerte werden mit den gespeicherten kalibrierten Sollwerten solange abgeglichen, bis eine hinreichend genaue und vorgegebene Kalibriergenauigkeit erreicht ist.

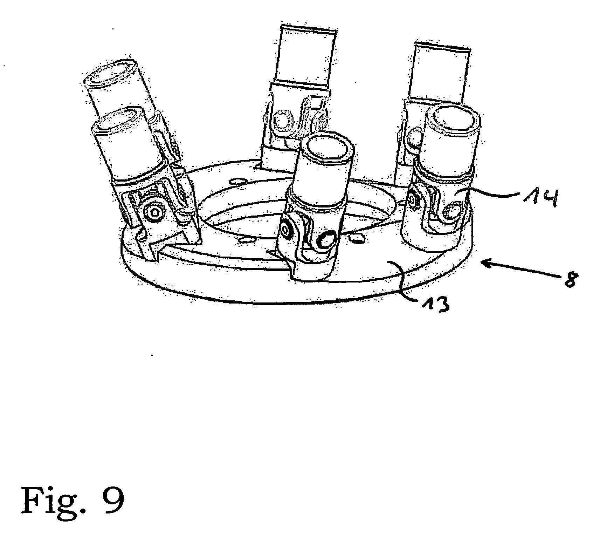

Fig. 9 zeigt eine perspektivische Ansicht des Gegenstandshalters 8 nach Fig. 5;

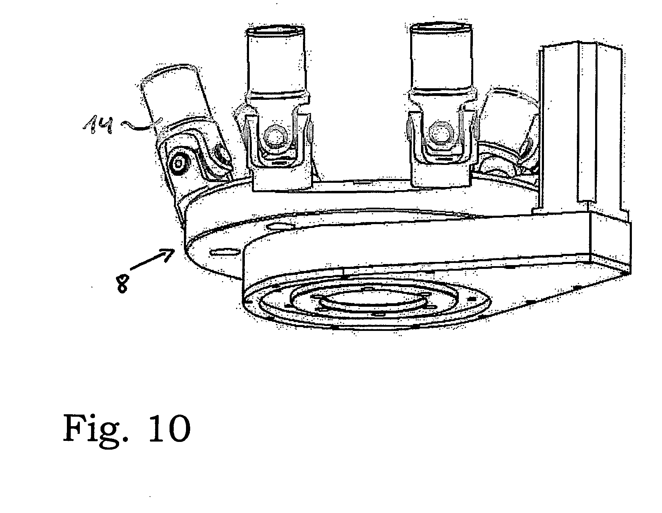

Fig. 10 zeigt eine weitere perspektivische Ansicht des Gegenstandshalters 8 aus schräger Sicht von unten mit der vierten Drehachse.

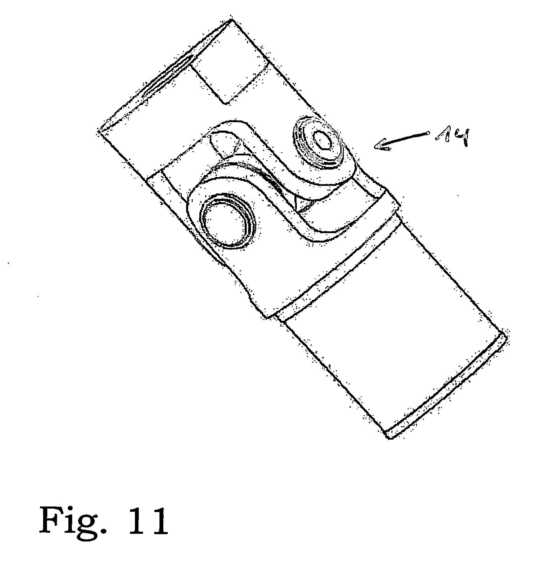

Fig. 11 zeigt eine perspektivische Ansicht des eigentlich für sich alleine schon erfinderischen Kardangelenkes 14.

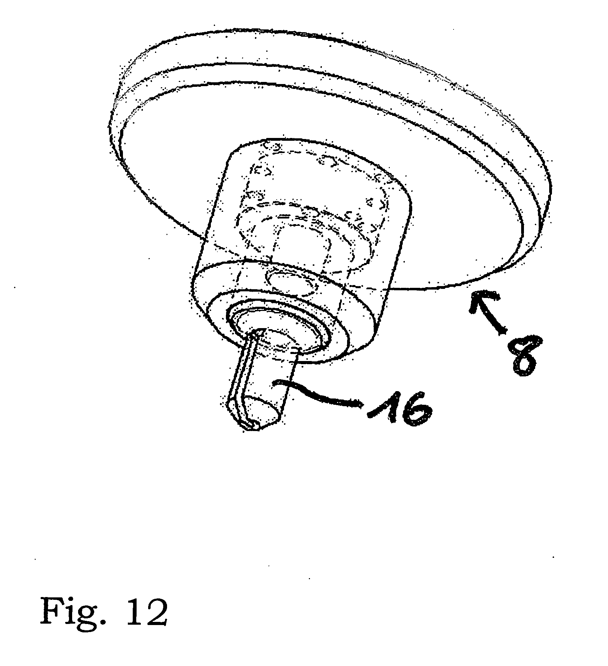

Fig. 12 zeigt eine perspektivische Ansicht des Gegenstandshalters 8 mit eingespanntem Messsensor 16. Anstatt des Messsensor 16 könnte am Gegenstandshalter 8 auch ein Werkzeug 10 angeordnet sein.

Im Einzelnen werden beispielhaft folgende Schritte ausgeführt:

Der Meßsensor 16 wird im Mittelpunkt der Stewart Plattform 8 zur Kalibrierung angebracht und an das Steuerungssystem 15 angeschlossen. Anschließend erfolgt ein Start der automatischen Kalibrierung an der Bedienoberfläche 22.

Die Anlage fährt eine endliche Anzahl von Meßpunkten 18 nacheinander an. Dabei werden die die mittels des Sensors 16 gemessenen Werte automatisch in eine Datei geschrieben. Es wird an jedem Meßpunkt 18 solange kontinuierlich gemessen, bis 10 Werte infolge innerhalb eines bestimmten Toleranzfensters liegen. Dadurch wird der Stopp der Anlage erkannt. Der letzte dieser 10 Werte wird übernommen.

Die Berechnung des Fensters wird in der Steuerungseinrichtung 15 wie folgt durchgeführt:

$$Wert1 - Wert2 = x$$

$$x^2 = \Delta$$

$$\Delta = 0,001$$

wobei $\Delta$ ein vorgegebener Toleranzwert beispielsweise in der Größenordnung der Meßgenauigkeit des Sensors 16 ist. Man erhält so ein 3-Dimensionales Bild der Fläche. Je mehr Messpunkte angefahren werden, desto genauer ist das Ergebnis.

Zur Ermittlung der Kalibrierdaten (Parameter) wird ein in der Steuerungseinrichtung 15 gespeichertes und ausgeführtes Programm verwendet. Dieses Programm benötigt beispielhaft folgende Dateien:

**poss_mess.dat:**
Diese Datei enthält die X- und Y-Werte sowie die **gemessenen** Z-Werte (Istwerte)
**poss_soll.dat:**
Datei enthält die vorgegebenen X -, Y- und Z-Werte (Sollwerte)
**geo.dat**
Diese Datei enthält die Geometrieparameter aus der Transformation.

Das Programm erstellt als Ausgabe eine Datei, die die aktualisierten Geometrieparameter beinhaltet. Diese Daten werden automatisch in die Transformationstabellen der Kinematik eingetragen und stehen somit der Anlage als Kalibrierungsdaten zur Verfügung. Die Anlage ist kalibriert und besitzt somit ihre zugesicherten Eigenschaften bezüglich Genauigkeit und Toleranz.
Anschließend kann der Wegemesssensor entfernt und ausgesteckt werden. Die kalibrierte Anlage ist somit betriebsbereit.

Bezugszahlenliste:

1     Grundplatte
2     Stützen
3     Öffnungsschlitz
4     Verbindungsrahmen
5     Gleitschuhe
6     Elektromotoren
7     Trägerarm
8     Gegenstandshalter
9     Gelenke
10    Werkzeug
11    Werkstück
12    flexible Welle und/oder Versorgungsleitung
13    Schrägflächen
14    Kardangelenk
15    Steuerungseinrichtung
16    Meßsensor
17    Meßplatte
18    Meßpunkt
19    Abdeckung
20    Schrank
21    Drehaufnahme
22    Bedienoberfläche
23    Haltevorrichtung

**Patentansprüche**

1. Vorrichtung zur dreidimensionalen Bewegung eines Gegenstandes

- mit einem Gegenstandshalter (8)
- mit einem Basisteil, das drei weitgehend vertikal angeordnete Stützen (2) und einen Verbindungsrahmen (4) aufweist,
- mit drei Trägerarmen (7) welche über Gelenke (9, 14) einenends mit dem Basisteil (2, 4) und andernends mit dem Gegenstandshalter (8) verbunden sind, wobei die Gelenke (9, 14) an die Stützen (2) für eine entsprechende vertikale Verstellung geführt sind, und
- mit einer Betätigungseinrichtung (6) der Trägerarme an deren dem Gegenstandshalter (8) abgewandten Ende,

**dadurch gekennzeichnet,**
**dass** das Basisteil (2, 4) mit an einer ortsfesten Grundplatte (1) angeordneten Haltevorrichtungen (23) verbunden ist, wodurch das Basisteil (2, 4) frei beweglich ist und in der Höhe verstellt werden kann.

2. Vorrichtung nach Anspruch 1, **dadurch gekennzeichnet, dass** die Trägerarme (7) als Doppelstangen ausgebildet sind.

3. Vorrichtung nach Anspruch 1 oder 2, **dadurch gekennzeichnet, dass** die Gelenke (9) als Kardangelenke (14) ausgebildet sind.

4. Vorrichtung nach einem der vorhergehenden Ansprüche, **dadurch gekennzeichnet, dass** die Stützen (2) als Profilstäbe ausgebildet sind und dass zur Führung der zugewandten Enden der Trägerarme (7), bzw. Gelenke (14) dem Profil der Profilstäbe (2) angepasste Gleitschuhe (5) dienen.

5. Vorrichtung nach einem der vorhergehenden Ansprüche, **dadurch gekennzeichnet, dass** die Gelenke auf diesen zugewandten Schrägflächen (13) des Gegenstandshalters (8) befestigt sind.

6. Vorrichtung nach einem der vorhergehenden Ansprüche, **dadurch** gekennzeichet, dass der Gegenstandshalter (8) für das Halten eines Gegenstandes, beispielsweise eines Werkzeugs 10, eine Halteeinrichtung beispielsweise eine Spannfutter odgl., aufweist und dass diese Halteeinrichtung und/oder das Werkzeug über eine flexible Welle (12) betätigbar ist.

7. Vorrichtung nach einem der vorhergehenden Ansprüche, **dadurch gekennzeichnet, dass** zumindest eine der Stützen (2) abnehmbar ist.

8. Vorrichtung nach einem der vorhergehenden Ansprüche, **dadurch gekennzeichnet, dass** eine Steuerungseinrichtung (15) in die Vorrichtung integriert und insbesondere unterhalb der Grundplatte (1) angeordnet ist.

**9.** Vorrichtung nach einem der vorhergehenden Ansprüche, **dadurch gekennzeichnet, dass** an dem Gegenstandshalter 8 ein drehend antreibbare Drehaufnahme (21) vorgesehen ist.

**10.** Vorrichtung nach einem der vorhergehenden Ansprüche, **dadurch gekennzeichnet, dass** an dem Gegenstandshalter (8) ein Meßsensor (16) befestigt ist.

**11.** Vorrichtung nach Anspruch 10, **dadurch gekennzeichnet, dass** der Meßsensor (16) mit einer Kalibriereinheit verbunden ist.

**12.** Vorrichtung nach Anspruch 11, **dadurch gekennzeichnet, dass** die Kalibriereinheit einen Istwert mit einem bekannten Sollwert vergleicht, wobei der Istwert durch ein Verfahren des an dem Gegenstandshalter (8) angeordneten Meßsensors (16) gegen eine definierte Anzahl von Meßpunkten (18) und dem für jeden Meßpunkt gemessener Weg ermittelt wird, und aus dem Vergleich der gemessenen Istwerte mit den bekannten Sollwerten Kalibrierfaktoren ermittelt werden, über die die Ansteuerung des Werkzeuges (10) korrigiert wird.

**13.** Vorrichtung nach Anspruch 12, **dadurch gekennzeichnet, dass** die Meßpunkte (18) in einer Ebene und insbesondere auf einer kalibrierten ebenen Meßplatte (17) angeordnet sind, daß als Meßsensor (16) ein eindimensionaler Wegaufnehmer vorgesehen ist, und wobei der Meßsensor im wesentlichen rechtwinklig zur Meßplatte verfahren wird.

**14.** Vorrichtung nach Anspruch 13, **dadurch gekennzeichnet, dass** die Meßplatte (17) horizontal bezogen auf das durch die Vorrichtung vorgegebene Koordinatensystem angeordnet ist, wobei der Meßsensor (16) zur Kalibrierung vertikal verfahrbar ist.

**Claims**

**1.** A device for the three-dimensional movement of an object:

- with an object holder (8),
- with a base unit, which has three mostly vertically arranged pillars (2) and a connecting frame (4),
- with three support arms (7), which via joints (9, 14) are connected at one end with the base unit (2, 4) and at the other end with the object holder (8), wherein the joints (9, 14) are guided on the pillars (2) for an appropriate vertical adjustment, and
- with an actuation unit (6) of the support arms at their end facing away from the object holder (8),

**characterised in that**
the base unit (2, 4) is connected with mounting devices (23) arranged on a fixed base plate (1), as a result of which the base unit (2, 4) can move freely and can be adjusted in height.

**2.** The device according to Claim 1, **characterised in that** the support arms (7) are designed as twin rods.

**3.** The device according to Claim 1 or 2, **characterised in that** the joints (9) are designed as Cardan joints (14).

**4.** The device according to one of the preceding claims, **characterised in that** the pillars (2) are designed as profiled bars, and **in that** sliding shoes (5) matched to the profile of the profiled bars (2) serve to provide guidance of the ends of the support arms (7), i.e. joints (14) facing towards the pillars.

**5.** The device according to one of the preceding claims, **characterised in that** the joints are attached to inclined faces (13) of the object holder (8) that are facing towards them.

**6.** The device according to one of the preceding claims, **characterised in that** to hold an object, for example a tool (10), the object holder (8) has a holding unit, for example a chuck, or similar, and **in that** this holding unit and/or the tool can be actuated via a flexible shaft (12).

**7.** The device according to one of the preceding claims, **characterised in that** at least one of the pillars (2) can be removed.

**8.** The device according to one of the preceding claims, **characterised in that** a control unit (15) is integrated into the device, and in particular is arranged underneath the base plate (1).

**9.** The device according to one of the preceding claims, **characterised in that** a rotary mounting (21) that can be driven in a rotating manner is provided on the object holder (8).

**10.** The device according to one of the preceding claims, **characterised in that** a measurement sensor (16) is attached to the object holder (8).

**11.** The device according to Claim 10, **characterised in that** the measurement sensor (16) is connected to a calibration unit.

**12.** The device according to Claim 11, **characterised in that** the calibration unit compares an actual value with a known required value, wherein the actual value is determined by means of a method of the measurement sensor (16) arranged on the object holder (8) for a defined number of measurement points (18) and the path measured for each measurement point, and from the comparison of the measured actual values with the known required values calibration factors are determined, via which the activation of the tool (10) is corrected.

13. The device according to Claim 12, **characterised in that** the measurement points (18) are arranged in one plane and in particular on a calibrated plane measurement plate (17), **in that** a one-dimensional path transducer is provided as a measurement sensor (16) and wherein the measurement sensor is traversed essentially at right-angles to the measurement plate.

14. The device according to Claim 13, **characterised in that** the measurement plate (17) is arranged horizontally with reference to the coordinate system prescribed by means of the device, wherein the measurement sensor (16) for purposes of calibration can be traversed vertically.

**Revendications**

1. Dispositif pour le déplacement en trois dimensions d'un objet comprenant

> - un porte-objet (8)
> - une partie de base, qui présente trois montants (2) disposés largement verticalement et un cadre de liaison (4),
> - trois bras supports (7) qui sont reliés par des articulations (9, 14) par une extrémité à la partie de base (2, 4) et par l'autre extrémité au porte-objet (8), les articulations (9, 14) étant guidées sur les montants (2) pour un déplacement vertical approprié,
> - un dispositif d'actionnement (6) des bras supports sur leur extrémité opposée au porte-objet (8), **caractérisé en ce que**

la partie de base (2, 4) est reliée à des dispositifs de retenue (23) disposés sur une plaque de base (1) fixe, de sorte que la partie de base (2, 4) est librement mobile et peut être déplacée dans la hauteur.

2. Dispositif selon la revendication 1, **caractérisé en ce que** les bras supports (7) sont conçus sous forme de doubles barres.

3. Dispositif selon la revendication 1 ou 2, **caractérisé en ce que** les articulations (9) sont conçues sous forme d'articulations à cardan (14).

4. Dispositif selon l'une quelconque des revendications précédentes, **caractérisé en ce que** les montants (2) sont conçus sous forme des barres profilées et **en ce que** des patins (5) adaptés au profil des barres profilées (2) servent au guidage des extrémités associées des bras supports (7) ou articulations (14).

5. Dispositif selon l'une quelconque des revendications précédentes, **caractérisé en ce que** les articulations sont fixées sur des surfaces inclinées (13), tournées vers ces articulations, du porte-objet (8).

6. Dispositif selon l'une quelconque des revendications précédentes, **caractérisé en ce que** le porte-objet (8) présente un dispositif de retenue, par exemple un mandrin de serrage ou similaire, pour le maintien d'un objet, par exemple d'un outil (10), et **en ce que** ce dispositif de retenue et/ou l'outil peut être actionné au moyen d'un arbre (12) flexible.

7. Dispositif selon l'une quelconque des revendications précédentes, **caractérisé en ce qu'**au moins l'un des montants (2) est amovible.

8. Dispositif selon l'une quelconque des revendications précédentes, **caractérisé en ce qu'**un système de commande (15) est intégré dans le dispositif et disposé en particulier au-dessous de la plaque de base (1).

9. Dispositif selon l'une quelconque des revendications précédentes, **caractérisé en ce qu'**un logement rotatif (21) pouvant être entraîné par rotation est prévu sur le porte-objet (8).

10. Dispositif selon l'une quelconque des revendications précédentes, **caractérisé en ce qu'**un capteur de mesure (16) est fixé sur le porte-objet (8).

11. Dispositif selon la revendication 10, **caractérisé en ce que** le capteur de mesure (16) est relié à une unité de calibrage.

12. Dispositif selon la revendication 11, **caractérisé en ce que** l'unité de calibrage compare une valeur réelle avec une valeur de consigne connue, la valeur réelle étant déterminée par un procédé du capteur de mesure (16) disposé sur le porte-objet (8) par rapport à un nombre défini de points de mesure (18) et le chemin parcouru pour chaque point de mesure, et des facteurs de calibrage, par lesquels l'actionnement de l'outil (10) est corrigé, étant déterminés à partir de la comparaison des valeurs réelles mesurées avec les valeurs de consigne connues.

13. Dispositif selon la revendication 12, **caractérisé en ce que** les points de mesure (18) sont disposés dans un plan et en particulier sur une plaque de mesure (17) plane et calibrée, de sorte qu'un capteur de déplacement unidimensionnel est prévu comme capteur de mesure (16), et le capteur de mesure étant déplacé principalement à angle droit par rapport à la plaque de mesure.

**14.** Dispositif selon la revendication 13, **caractérisé en ce que** la plaque de mesure (17) est disposée horizontalement par rapport au système de coordonnées prédéfini par le dispositif, le capteur de mesure (16) étant déplacé verticalement pour le calibrage.

Fig. 1

Fig. 2

Fig. 3

**Fig. 4**

**Fig. 5**

*Fig. 6*

*Fig. 7*

*Fig. 8*

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT PSE65200 B
- DE OS19920776 A1
- DE 19614641 A